# EUROPÄISCHE PATENTSCHRIFT

(11) **EP 4 300 034 B1**
(45) Veröffentlichungstag und Bekanntmachung des Hinweises auf die Patenterteilung: **11.06.2025**
(21) Anmeldenummer: 22182054.1
(22) Anmeldetag: 29.06.2022
(51) Int. Cl.: G01B 11/25, G01B 17/02, G01B 11/00

(54) **VERFAHREN UND SYSTEM ZUM ERFASSEN VON EIGENSCHAFTEN EINES FLÄCHENABSCHNITTS AN EINEM LUFTFAHRZEUG**
METHOD AND SYSTEM FOR DETECTING THE PROPERTIES OF A SECTION OF AN AIRCRAFT
PROCÉDÉ ET SYSTÈME DE DÉTECTION DES PROPRIÉTÉS D'UNE SECTION DE SURFACE SUR UN AÉRONEF

(43) Veröffentlichungstag der Anmeldung: 03.01.2024
(73) Patentinhaber: Airbus Operations GmbH, 21129 Hamburg (DE)
(72) Erfinder: Kappelhoff, Misha, 21129 Hamburg (DE); Böttcher, Pia, 21129 Hamburg (DE); Sutor, Julian, 21129 Hamburg (DE); Ehrhardt, Paul, 21129 Hamburg (DE)

(56) Entgegenhaltungen:
- WO-A1-2009/140465
- DE-A1- 102007 019 764
- US-A1- 2013 028 478

## Beschreibung

### Technisches Gebiet

Die vorliegende Beschreibung betrifft ein Verfahren und ein System zum Erfassen von Eigenschaften eines Flächenabschnitts an einem Luftfahrzeug.

### Technischer Hintergrund

Zur Kartierung von Schadstellen an einem Luftfahrzeug wird als Standardverfahren üblicherweise eine taktile Methode eingesetzt, bei der Messschieber, Messuhren und dergleichen eingesetzt werden. Hierbei werden manuelle Messungen vorgenommen und in handschriftlichen Berichten nebst Handskizzen festgehalten.

Aus WO 2014 / 014 786 A1 ist ein tragbares Gerät für eine 3D-Oberflächenmesstechnik bekannt, das strukturierte Lichtmessmuster erzeugt und diese nacheinander auf eine Zieloberfläche projiziert. Merkmale, Konturen und Texturen der Zieloberfläche verzerren jedes projizierte Messmusterbild gegenüber dem ursprünglichen Messmuster. Das Gerät fotografiert jedes Messmusterbild, extrahiert hieraus Messdaten aus den erkannten Verzerrungen und leitet aus ausgewählten Aspekten der Messdaten ein Ergebnisbild ab. Das Gerät verzerrt das Ergebnisbild, um Verzerrungen durch den Projektor oder die Oberfläche zu kompensieren, und projiziert das Ergebnisbild auf die gemessene Oberfläche, optional mit anderen Informationen wie Zusammenfassungen, Gerätestatus, Menüs und Anweisungen.

Aus US 2013/028478 A1 ist die Dickenmessung an einem Objekt mittels eines handgeführten Ultraschallmesskopfes bekannt, wobei Marker am Objekt und am Messkopf angebracht sind, welche genutzt werden um die Messwerte des Messkopfes in ein Objektkoordinatensystem umzuwandeln.

Für zusätzliche Informationen, beispielsweise eine lokale Materialstärke in mehreren Positionen der Schadstelle, sind weiterhin manuelle Messungen mit handgeführten Messgeräten notwendig, welche direkt auf die Oberfläche gesetzt und abgelesen werden müssen.

### Beschreibung

**In** dem üblichen Prozess der Schadenskartierung werden Schadstellen teilweise nicht über die gesamte Lebensdauer eines Luftfahrzeugs hinweg verfolgt. Das bedeutet, dass eine ältere Schadstelle, welche zuvor vermessen und als noch in Ordnung befunden wurde, später erneut aufgefunden und erneut vermessen werden kann, was insgesamt zeitaufwändig sein kann. Die Korrelation zwischen der mittels eines 3D-Verfahrens erfassten Oberflächenstruktur und separat erfassten Materialstärken ist mit bekannten Mitteln aufwändig und kann unpräzise sein.

Es kann als Aufgabe betrachtet werden, ein Verfahren und/oder ein System zum Erfassen von Eigenschaften eines Flächenabschnitts vorzuschlagen, bei dem eine präzise Korrelation von Oberflächenstrukturen und zusätzlichen Messdaten mit geringem Aufwand ermöglicht wird.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird ein Verfahren zum Erfassen von Eigenschaften eines Flächenabschnitts an einem Luftfahrzeug vorgeschlagen, aufweisend die Schritte des Anbringens eines Markierungselements mit mehreren Rastermarkierungen neben einem Flächenabschnitt auf das Luftfahrzeug, des gleichzeitigen optisches Erfassens mindestens eines Bereichs des Markierungselements und mindestens eines Bereichs des Flächenabschnitts mittels einer optischen Erfassungseinrichtung, des Entfernens der optischen Erfassungseinrichtung, des ein- oder mehrfachen Führens einer handgeführten Sensoreinrichtung an eine vorgegebene Position relativ zu dem Markierungselement innerhalb des Flächenabschnitts und dortiges Erfassen einer Materialeigenschaft, des Korrelierens der erfassten Materialeigenschaft mit der betreffenden Position in einem Datensatz, und des Generierens und Ablegens einer Schadenskarte, in der eine optisch erfasste Struktur des Flächenabschnitts mit der zusätzlichen Materialeigenschaft an mindestens einer Position zusammengeführt sind, wobei das Führen der Sensoreinrichtung das Projizieren mindestens einer Laserlinie von der Sensoreinrichtung nach außen und das Verschieben der Sensoreinrichtung zum Fluchten der mindestens einen Laserlinie mit mindestens einer der Rastermarkierungen umfasst.

Der zu untersuchende Flächenabschnitt kann ein Abschnitt eines eine Fläche ausbildenden Körpers des Luftfahrzeugs sein. Der Flächenabschnitt kann insbesondere eine flächige Erstreckung aufweisen, die beispielsweise durch ein flächiges Bauteil gebildet wird. Das flächige Bauteil könnte eine Außenhaut umfassen oder ein Teil davon sein. Die Fläche kann eine optisch zu untersuchende Oberflächenstruktur aufweisen, wobei durch das erfindungsgemäße Verfahren zusätzliche Materialeigenschaften erfasst werden. Beispielsweise weist der Flächenabschnitt eine Schadstelle auf, welche optisch durch eine geänderte Oberflächenstruktur erkennbar sein könnte. Als zusätzliche, zu erfassende Materialeigenschaft eignet sich etwa eine Materialstärke des Flächenabschnitts bzw. eines den Flächenabschnitt ausbildenden flächigen Bauteils.

Das Markierungselement dient dazu, ein lokales Koordinatensystem an dem Flächenabschnitt zu definieren, welches später für die Zusammenführung von Messergebnissen unterschiedlicher Quellen dient. Das Markierungselement kann dabei in Form eines Aufklebers, eines flachen Magnetkörpers oder durch andere, zumindest temporär fest auf der betreffenden Fläche anbringbare Elemente realisiert sein. Es ist denkbar, während des Verfahrens auch ein Markierungselement durch eine Projektion von Lichtsignalen zu realisieren.

Das Markierungselement weist an seiner von der es aufnehmenden Fläche abgewandten Seite mindestens eine und bevorzugt mehrere Rastermarkierungen auf, die bevorzugt optisch erfassbar sind. Es ist zunächst nicht erheblich, welche Form das Markierungselement aufweist, um seine grundlegende Funktion zu erfüllen. Das Markierungselement kann beliebig platziert und grundsätzlich beliebig ausgerichtet werden. Ziel ist, eine optische Erfassung des Flächenabschnitts mit dem direkt daneben angeordneten Markierungselement durchzuführen, um im Anschluss die Sensoreinrichtung relativ zu dem Markierungselement bzw. den darauf angeordneten Rastermarkierungen getrennt von der optischen Erfassungseinrichtung auszurichten.

Die optische Erfassungseinrichtung kann eine Einrichtung sein, die in der vorangehend genannten Druckschrift WO 2014 / 014 786 A1 ausgeführt ist. Sie ist insbesondere dazu ausgebildet, durch optische Verfahren eine Oberflächenstruktur des Flächenabschnitts zu ermitteln, wobei bei dieser Ermittlung die Lage des Flächenabschnitts durch das Markierungselement miterfasst wird. Die aus der optischen Erfassungseinrichtung gelieferten Messdaten können in eine Schadenskarte übertragen werden, in der die lokalen Koordinaten mittels des durch das Markierungselement definierten Koordinatensystems beschreibbar sind. Das optische Erfassen bildet einen ersten Prozess in dem erfindungsgemäßen Verfahren. Es kann dem eines üblichen Prozesses zum Erfassen einer Oberflächenstruktur entsprechen, wie es in WO 2014 / 014 786 A1 beschrieben ist.

Nachdem mit der optischen Erfassungseinrichtung der Flächenabschnitt und das Markierungselement gleichermaßen und die Schadstelle optisch erfasst wurden, kann die optische Erfassungseinrichtung entfernt werden. Es ist dann ohne weiteres möglich, zusätzliche Messungen an dem Flächenabschnitt durchzuführen, deren Positionen dann ebenso relativ zu dem Markierungselement gemessen werden. Dies bildet den zweiten Prozess des Verfahrens. Zur präzisen Positionierung der Sensoreinrichtung in dem lokalen Koordinatensystem weist die Sensoreinrichtung eine entsprechende Lasereinheit auf, die dazu ausgebildet ist, mindestens eine Laserlinie nach außen abzugeben, um die mindestens eine Laserlinie mit Rastermarkierungen fluchten zu lassen.

Es ist denkbar, dass die Sensoreinrichtung eine Auflagefläche aufweist, die auf die zu prüfende Oberfläche aufzulegen ist. Weiterhin ist denkbar, dass die Sensoreinrichtung eine Eingabeeinheit aufweist, die in Form eines Tasters oder dergleichen ausgeführt ist. Nach einer Positionierung und einer entsprechenden Eingabe, d.h. einer Betätigung des Tasters, kann eine lokale Messung durchgeführt werden. Die mindestens eine Laserlinie wird von der Sensoreinrichtung in einer bestimmten, festen Richtung nach außen abgegeben und mit mindestens einer der Rastermarkierungen in Fluchtung gebracht. Da die Ausrichtung der Laserlinie zu der Sensoreinrichtung fest ist und die Relativposition des Markierungselements zu dem Flächenabschnitt nach der optischen Erfassung bekannt ist, können alle anschließend gemessenen Materialeigenschaften mit diskreten Positionen des Flächenabschnitts korreliert und in der Schadenskarte abgelegt werden.

Die Sensoreinrichtung könnte hierzu beispielsweise mit einer Recheneinheit gekoppelt sein, um nach Durchführen jeder Messung das Messergebnis an die Recheneinheit zu übersenden. In der Recheneinheit könnte ein Abbild aus der optischen Erfassungseinrichtung vorliegen. Das jeweilige Messergebnis wird in der Schadenskarte einer entsprechenden Koordinate hinzugefügt. Das erfindungsgemäße Verfahren erlaubt damit sehr komfortabel, verschiedene Arten von Messungen automatisiert und präzise zusammenzuführen.

In einer vorteilhaften Ausführungsform weist das Markierungselement zwei rechtwinklig zueinander angeordnete Arme auf, die jeweils Rastermarkierungen aufweisen. Die beiden Arme des Markierungselements können dadurch ein lokales, der Schadensstelle zugeordnetes Koordinatensystem aufspannen. Beide Arme könnten jeweils gleiche oder unterschiedliche Rastermarkierungen aufweisen, die als Koordinatentupel fungieren. Die Sensoreinrichtung kann an unterschiedlichen Positionen der Schadensstelle platziert werden, die durch das lokale Koordinatensystem eindeutig erfasst werden können. Damit wird ein eindeutiger und präziser Zusammenhang zwischen dem Ort der Sensoreinrichtung und der Position in dem lokalen Koordinatensystem ermöglicht.

In einer vorteilhaften Ausführungsform wird die Sensoreinrichtung mehrfach auf einer matrixartigen Anordnung von Positionen geführt. Dadurch kann die Fläche des Flächenabschnitts nach und nach durch die Sensoreinrichtung abgetastet werden. Es ist denkbar, dabei lediglich einen Teil der Fläche zu berücksichtigen. Beispielsweise könnte nach der optischen Erfassung des Flächenabschnitts ein Bereich identifiziert werden, der signifikantere Schäden aufweist. Dieser Bereich könnte gezielt mittels der Sensoreinrichtung untersucht werden. Die Sensoreinrichtung könnte nacheinander verschiedene Positionen der matrixartigen Anordnung untersuchen, indem sie nacheinander auf bestimmte Positionen gesetzt wird, um nach einer durchgeführten Messung auf eine nächste Position gesetzt zu werden.

In einer vorteilhaften Ausführungsform werden das Markierungselement und der Flächenabschnitt vollständig mittels der optischen Erfassungseinrichtung in einer oder mehreren Erfassungsvorgängen erfasst. Ist der Flächenabschnitt relativ groß, könnte der Erfassungsbereich der optischen Erfassungseinrichtung nicht ausreichen, um eine vollständige Abbildung des Flächenabschnitts zu ermöglichen. Durch die Verwendung des Markierungselements, das bevorzugt eine an die Größe des Flächenabschnitts angepasste Flächenerstreckung aufweist, kann der Flächenabschnitt auch in mehreren Schritten erfasst werden. In jedem der Schritte kann ein Teilbereich des Flächenabschnitts mit einem Teilbereich des Markierungselements erfasst werden. Die einzelnen Teilabbildungen werden basierend auf den jeweils erfassten Teilen des Markierungselements zu einer Gesamtabbildung zusammengesetzt. Jeder einzelne, nachfolgende Messvorgang mit der Sensoreinrichtung erlaubt dann eine Korrelation der Messungen mit der Gesamtabbildung in einer Schadenskarte.

In einer vorteilhaften Ausführungsform projiziert die Sensoreinrichtung Kreuzlinien. Die Sensoreinrichtung weist hierzu eine Kreuzlinien-Lasereinheit auf, die zwei rechtwinklig zueinander verlaufende Laserlinien abgibt. Damit können gleichzeitig zwei Rastermarkierungen angepeilt werden, die sich auf zwei Armen des Markierungselements befinden, sodass die jeweilige Position der Sensoreinrichtung präzise erfasst wird. Es ist dabei günstig, die Sensoreinrichtung derart auszurichten, dass sie eine vorgegebene Orientierung gegenüber dem lokalen Koordinatensystem aufweist. Hiermit können besonders vorteilhaft flächige Bereiche nach und nach mit einzelnen Messungen von Materialeigenschaften abgetastet und in die Schadenskarte überführt werden.

In einer vorteilhaften Ausführungsform wird die Sensoreinrichtung nacheinander auf den Positionen der matrixartigen Anordnung derart verschoben, dass dabei die Kreuzlinien mit mehreren Paaren von Rastermarkierungen der beiden Arme des Markierungselements korrelieren. Das Verschieben kann von Hand erfolgen, wobei der entsprechende Benutzer durch Sichtkontrolle die Position der Sensoreinrichtung anhand des Markierungselements prüft und entsprechend einstellt.

In einer weiter vorteilhaften Ausführungsform wird die vorgegebene Position jeweils durch ein optisches, akustisches oder haptisches Signal mitgeteilt, wobei das Erfassen durch Betätigen einer Eingabeeinheit nach dem Führen der Sensoreinrichtung initiiert wird. Die Recheneinheit könnte beispielsweise eine Anzeigeeinheit aufweisen, die einem Benutzer eine einzunehmende Position anzeigt. Der Benutzer kann danach die Sensoreinheit auf die angezeigte Position setzen und dort eine Messung durchführen. Die Messung kann an die Recheneinheit übertragen werden, die dann davon ausgeht, dass die vorher angezeigte Position durch die Sensoreinheit eingenommen wurde und der übertragene Messwert zu dieser Position gehört. Somit kann vollautomatisch eine Reihe von Einzelmessungen mit Positionen innerhalb der Schadstelle korreliert werden.

Die Erfindung betrifft ferner ein System zum Erfassen von Eigenschaften eines Flächenabschnitts an einem Luftfahrzeug, aufweisend mindestens ein Markierungselement mit mehreren Rastermarkierungen zum Aufbringen neben einen Flächenabschnitt auf das Luftfahrzeug, eine handgeführte Sensoreinrichtung, und eine Recheneinheit, wobei die Recheneinheit dazu ausgebildet ist, Oberflächenstrukturdaten von einer optischen Erfassungseinrichtung aufzunehmen, die dazu ausgebildet ist, eine Struktur des Flächenabschnitts nebst Markierungselement optisch abzutasten, wobei die Sensoreinrichtung dazu ausgebildet ist, eine lokale Materialeigenschaft an dem Flächenabschnitt zu erfassen, wobei die Sensoreinrichtung dazu ausgebildet ist, mindestens eine Laserlinie nach außen abzugeben, um einen Benutzer zu führen, die Sensoreinrichtung zum Fluchten der mindestens einen Laserlinie mit mindestens einer der Rastermarkierungen des neben dem Flächenabschnitt aufgeklebten Markierungselements zu bewegen, wobei die Recheneinheit dazu ausgebildet ist, die erfasste Materialeigenschaft mit der betreffenden Position in einem Datensatz zu korrelieren, und wobei die Recheneinheit dazu ausgebildet ist, eine Schadenskarte zu generieren und abzulegen, in der eine optisch erfasste Struktur des Flächenabschnitts mit der zusätzlichen Materialeigenschaft an mindestens einer Position zusammengeführt sind. Die Recheneinheit kann eine Software enthalten, die zur Aufnahme und Verarbeitung von Strukturdaten im Sinne des vorangehend genannten Verfahrens geeignet ist.

In einer vorteilhaften Ausführungsform weist das Markierungselement zwei rechtwinklig zueinander angeordnete Arme auf, die jeweils Rastermarkierungen aufweisen.

In einer vorteilhaften Ausführungsform ist die Sensoreinrichtung dazu ausgebildet, Kreuzlinien zu projizieren. Damit kann, wie vorangehend erläutert, eine Einstellung und Prüfung der Position der Sensoreinrichtung erfolgen.

**In** einer vorteilhaften Ausführungsform weist die Sensoreinrichtung eine Auflagefläche auf, die zum Erfassen der Materialeigenschaft auf den Flächenabschnitt aufzulegen ist, wobei die Sensoreinrichtung dazu ausgebildet ist, die mindestens eine Laserlinie parallel zu der Auflagefläche zu projizieren.

**In** einer vorteilhaften Ausführungsform weist die Sensoreinrichtung einen Ultraschallmesskopf auf. Dieser könnte dazu vorgesehen sein, eine Materialstärke zu prüfen.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Oberfläche mit Flächenabschnitt und Markierungselement.
- Fig. 2: eine schematische Darstellung einer optischen Erfassungseinrichtung, die eine Oberflächenstruktur der Oberfläche erfasst.
- Fig. 3: eine schematische Darstellung einer Sensoreinrichtung auf dem Flächenabschnitt.
- Fig. 4: eine schematische Darstellung eines Verfahrens.
- Fig. 5: eine schematische Darstellung eines Systems.

### Detaillierte Beschreibung von Ausführungsbeispielen

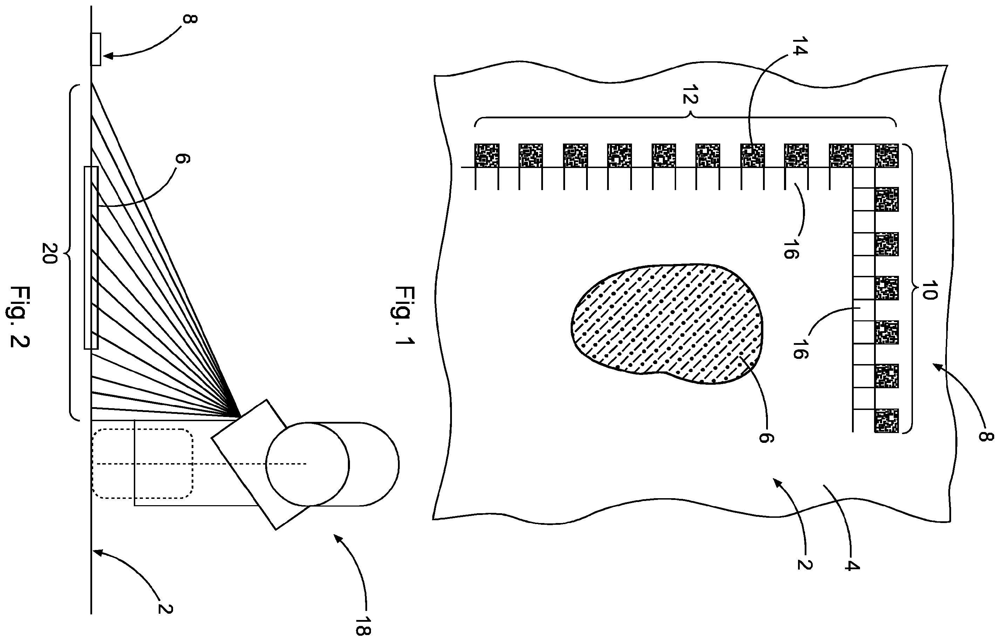

Fig. 1 zeigt einen Ausschnitt einer Oberfläche 2 eines Luftfahrzeugrumpfes 4, auf dem eine Schadstelle 6 als ein zu untersuchender Flächenabschnitt vorliegt. Zum Erfassen von Eigenschaften der Schadstelle 6 wird ein Verfahren vorgeschlagen, welches mehrstufig abläuft und optisch erfasste Topographieinformationen mit Messergebnissen anderer Sensoren zusammenführt.

Hierbei wird zunächst ein Markierungselement 8 neben die Schadstelle 6 geklebt. Das Markierungselement 8 ist in diesem Ausführungsbeispiel L-förmig ausgebildet und weist zwei senkrecht zueinander angeordnete Arme 10 und 12 auf. Diese definieren ein lokales Koordinatensystem, das unmittelbar neben der Schadstelle 6 aufgespannt wird. Dabei stellt der erste Arm 10 eine erste Achse und der zweite Arm 12 eine zweite Achse dar. Durch ihre rechtwinklige Anordnung ist das Koordinatensystem kartesisch. Es dient als Grundlage für eine zu generierende Schadenskarte. Es ist vorstellbar, dass das Markierungselement 8 möglichst derart zu einem flugzeugfesten Koordinatensystem aufgeklebt wird, dass zumindest einer der beiden Arme 10 und 12 parallel zu einer der Hauptachsen des flugzeugfesten Koordinatensystems verläuft.

Die beiden Arme 10 und 12 weisen jeweils erste Rastermarkierungen 14 auf, die hier beispielhaft als QR-Code ausgeführt sind. Diese sind einfach digital erfassbar, und könnten beispielsweise Buchstaben und/oder Zahlen repräsentieren. Es sind zweite Rastermarkierungen 16 an den Armen 10 und 12 vorgesehen, die für den Menschen lesbar sind und Buchstaben (erster Arm 10) oder Zahlen (zweiter Arm 12) aufweisen. Durch Ablesen der ersten bzw. zweiten Rastermarkierungen 16 auf beiden Armen 10 und 12 kann jede Position auf der Schadstelle 6 dem lokalen Koordinatensystem zugeordnet werden.

Fig. 2 zeigt schematisch eine optische Erfassungseinrichtung 18, die auf die Oberfläche 2 gesetzt wird, um strukturierte Lichtmessmuster 20 auf die Oberfläche 2 und damit auch auf die Schadstelle 6 zu projizieren. Die Lichtmessmuster 20 werden durch die charakteristischen Eigenschaften der Oberfläche 2 an der Schadstelle 6 gegenüber den ursprünglichen Messmustern 20 verzerrt. Bei der Projektion jedes Lichtmessmusters 20 fotografiert die Erfassungseinrichtung 18 die Oberfläche 2 und kann aus den in dem Abbild feststellbaren Verzerrungen eine Oberflächenstruktur der Schadstelle 6 herleiten. Durch das Fotografieren der Oberfläche 2 wird zudem auch das Markierungselement 8 erfasst, sodass die Topographie der Schadstelle 6 stets in dem durch das Markierungselement 8 definierten lokalen Koordinatensystem vorliegt. Nach Durchführung dieses ersten Prozesses des Verfahrens wird die Erfassungseinrichtung 18 von der Oberfläche 2 entfernt. Es verbleibt das Markierungselement 8 auf der Oberfläche 2 für einen nachfolgenden Prozess, in dem weitere Materialeigenschaften erfasst werden.

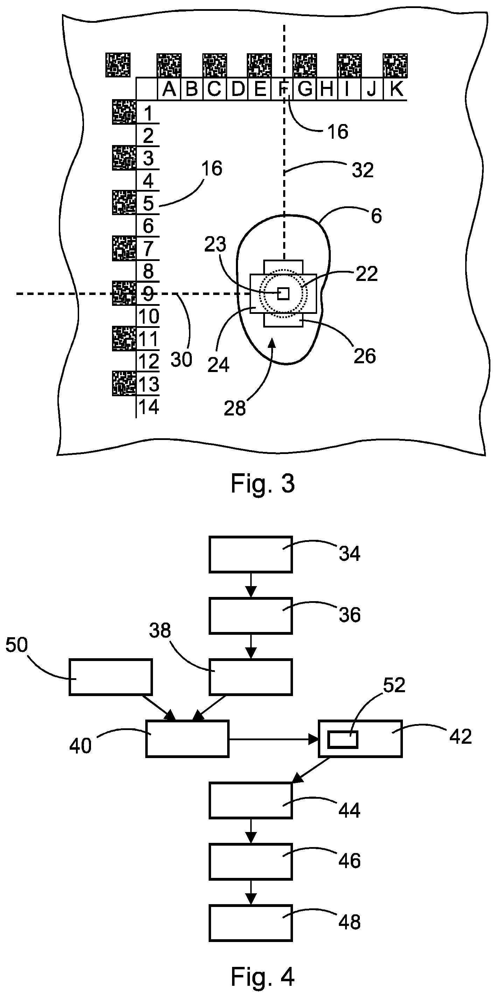

Fig. 3 zeigt die Schadstelle 6, auf der eine Sensoreinrichtung 22 angeordnet ist. Die Sensoreinrichtung 22 könnte beispielsweise einen Ultraschall-Messkopf aufweisen, der dazu ausgebildet ist, eine Materialstärke des Rumpfes 4 an der lokalen Position der Sensoreinrichtung 22 zu bestimmen. Eine Eingabeeinheit 23 in Form eines Tasters kann eine Initiierung eines Messvorgangs ausführen. Die Sensoreinheit 22 weist bevorzugt eine Kommunikationseinheit, entweder kabelgebunden oder bevorzugt kabellos, auf, mit der ein Messergebnis an eine hier nicht dargestellte Recheneinheit übertragen wird.

Die Sensoreinrichtung 22 weist ferner eine erste Linienlasereinheit 24 und eine zweite Linienlasereinheit 26 auf, die zusammen eine Kreuzlinienlasereinheit 28 bilden und fest an der Sensoreinrichtung 22 angeordnet sind. Die erste Linienlasereinheit 24 ist dazu ausgebildet, in der Zeichnungsebene in Fig. 3 erste horizontale Laserlinien 30 abzugeben, während die zweite Lasereinheit 26 dazu ausgebildet, zweite Laserlinien 32 in dazu senkrechter Richtung abzugeben. Die Laserlinien 30 und 32 können in Fluchtung mit den Markierungselementen 16 des ersten Arms 10 und des zweiten Arms 12 gebracht werden, sodass ein Benutzer daraus direkt die Position der Sensoreinheit 22 innerhalb des lokalen Koordinatensystems ablesen bzw. die Sensoreinheit 22 an einer gewünschten Position platzieren kann. In Fig. 3 fluchtet die erste Laserlinie 30 mit der zweiten Rastermarkierung "9" des zweiten Arms 10, während die zweite Laserlinie 32 mit der zweiten Rastermarkierung "F" des ersten Arms 10 fluchtet. Die Position der Sensoreinrichtung 22 ist dann folglich mit "F9" zu bezeichnen. Diese Position ist in dem Abbild der Schadstelle 6 aus der optischen Erfassungseinrichtung 18 bekannt.

Ein Benutzer kann an mehreren Positionen der Schadstelle 6 Messungen durchführen und diese in dem lokalen Koordinatensystem an eine Recheneinheit weitergeben. Damit kann automatisch eine Korrelation zwischen der Oberflächenstruktur der Schadstelle 6 und den weiteren Materialeigenschaften, die durch die Sensoreinheit 22 erfasst werden, durchgeführt werden.

Das Verfahren ist weiterhin in Fig. 4 dargestellt. Es beginnt mit dem Schritt des Anbringens 34 des Markierungselements 8 mit mehreren Rastermarkierungen 14, 16 neben dem Flächenabschnitt 6, beispielsweise einer Schadstelle, auf das Luftfahrzeug. Anschließend erfolgt das gleichzeitige optische Erfassen 36 mindestens eines Bereichs des Markierungselements 8 und mindestens eines Bereichs des Flächenabschnitts 6 mittels der optischen Erfassungseinrichtung 18, wonach die optische Erfassungseinrichtung 18 wieder entfernt wird 38. Das Markierungselement 8 bleibt auf der Oberfläche 2. In einem weiter nachfolgenden Schritt erfolgt das ein- oder mehrfache Führen 40 der handgeführten Sensoreinrichtung 22 an eine vorgegebene Position relativ zu dem Markierungselement 8 innerhalb des Flächenabschnitts 6 und dortiges Erfassen 42 einer Materialeigenschaft. Die so erfassten Materialeigenschaften werden mit der betreffenden Position in einem Datensatz korreliert 44 und anschließend wird eine Schadenskarte generiert 46 und abgelegt 48, in der eine optisch erfasste Struktur des Flächenabschnitts 6 mit der zusätzlichen Materialeigenschaft an mindestens einer Position zusammengeführt sind. Wie vorangehend erläutert umfasst das Führen der Sensoreinrichtung 22 dabei das Projizieren mindestens einer Laserlinie 30, 32 von der Sensoreinrichtung 22 nach außen und das Verschieben der Sensoreinrichtung 22 zum Fluchten der mindestens einen Laserlinie 30, 32 mit mindestens einer der Rastermarkierungen 14, 16. Die jeweiligen Positionen, an die die Sensoreinrichtung 22 geführt 40 werden soll, könnte durch Abgeben 50 eines optischen, akustischen oder haptischen Signals einem Benutzer mitgeteilt werden. Der Benutzer kann das Erfassen 42 durch Betätigen 52 einer Eingabeeinheit nach dem Führen 40 der Sensoreinrichtung 22 initiieren.

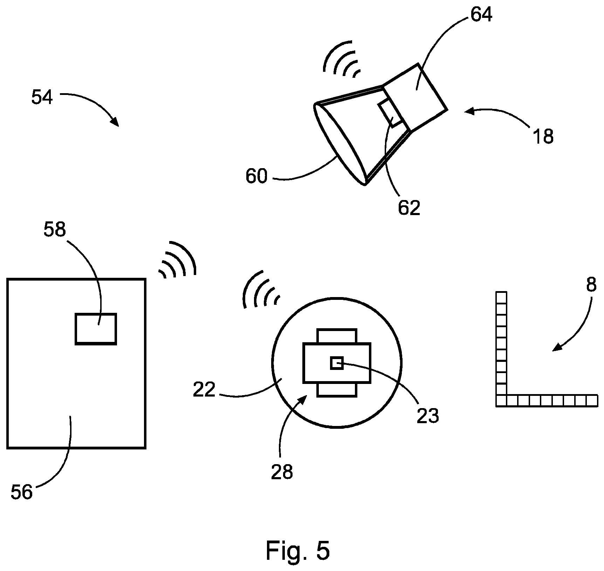

Fig. 5 zeigt ein System 54 zum Erfassen von Eigenschaften eines Flächenabschnitts 6, beispielsweise einer Schadstelle, und weist das Markierungselement 8 mit mehreren Rastermarkierungen 14, 16 zum Aufbringen neben den Flächenabschnitt 6 auf das Luftfahrzeug, die handgeführte Sensoreinrichtung 22 und eine Recheneinheit 56 auf.

Die Recheneinheit 56 ist dazu ausgebildet ist, Oberflächenstrukturdaten von der optischen Erfassungseinrichtung 18 aufzunehmen, die hier schematisch dargestellt ist und neben einer Optik 62 eine Verarbeitungseinheit 64 und einen Auflagerahmen 60 zum Auflegen der Erfassungseinrichtung 18 auf die Oberfläche 2 zum Einhalten eines vorbestimmten Abstandes der Optik 62 von der Oberfläche 2 aufweist. Die optische Erfassungseinrichtung 18 ist nicht zwangsläufig Teil des Systems 54, sondern kann separat für die Verwendung des erfindungsgemäßen Verfahrens in unterschiedlichen Varianten eingesetzt werden. Sie ist dazu ausgebildet, eine Struktur des Flächenabschnitts 6 nebst Markierungselement 8 optisch abzutasten und hierbei Strukturdaten bereitzustellen. Diese können an die Recheneinheit 56 übertragen werden, um dort verarbeitet zu werden.

Die Sensoreinrichtung 22 ist indes dazu ausgebildet ist, eine lokale Materialeigenschaft, beispielsweise die Dicke, an dem Flächenabschnitt 6 zu erfassen, wobei ein Benutzer die Sensoreinrichtung 22 geführt durch die Kreuzlinien-lasereinheit 28 relativ zu dem Markierungselement 8 platziert. Durch Betätigen der Eingabeeinheit 23, die beispielsweise auf der von der Oberfläche 2 abgewandten Seite der Sensoreinrichtung 22 angeordnet ist, kann eine Messung initiiert werden.

Die Recheneinheit 56 ist dazu ausgebildet, die erfasste Materialeigenschaft mit der betreffenden Position in einem Datensatz zu korrelieren und hierbei mit den zuvor erfassten Strukturdaten eine Schadenskarte zu generieren und abzulegen. Die Materialeigenschaften sind dann eindeutig und präzise mit den Strukturdaten korreliert. Die Recheneinheit 56 kann hierfür eine geeignete Software 58 enthalten, die zur Aufnahme und Verarbeitung von Strukturdaten im Sinne des vorangehend genannten Verfahrens und von erfassten Materialeigenschaften geeignet ist.

Beispielsweise könnte die Schadenskarte eine Art Heatmap sein, in der lokale Höhenabweichungen der Oberfläche 2 dargestellt werden, welche in Abhängigkeit von lokalen Materialstärken entsprechend eingefärbt sind, wobei "heißere", d.h. in ein Rot übergehende Farben für geringere oder zu geringe Materialstärken stehen können.

### Bezugszeichenliste

- 2: Oberfläche
- 4: Luftfahrzeugrumpf
- 6: Flächenabschnitt, z.B. Schadstelle
- 8: Markierungsaufkleber
- 10: erster Arm
- 12: zweiter Arm
- 14: erste Rastermarkierungen
- 16: zweite Rastermarkierungen
- 18: optische Erfassungseinrichtung
- 20: Lichtmessmuster
- 22: Sensoreinrichtung
- 23: Eingabeeinheit
- 24: erste Linienlasereinheit
- 26: zweite Linienlasereinheit
- 28: Kreuzlinienlasereinheit
- 30: erste Laserlinie
- 32: zweite Laserlinie
- 34: Anbringen Markierungsaufkleber
- 36: optisches Erfassen
- 38: Entfernen optischer Erfassungseinrichtung
- 40: ein- oder mehrfaches Führen der Sensoreinrichtung
- 42: Erfassen einer Materialeigenschaft
- 44: Korrelieren mit Position
- 46: Generieren Schadenskarte
- 48: Ablegen Schadenskarte
- 50: Abgeben Signal
- 52: Betätigen Eingabeeinheit
- 54: System
- 56: Recheneinheit
- 58: Software
- 60: Auflagerahmen

## Patentansprüche

1. Verfahren zum Erfassen von Eigenschaften eines Flächenabschnitts (6) an einem Luftfahrzeug, aufweisend die Schritte:
- Anbringen (34) eines Markierungselements (8) mit mehreren Rastermarkierungen (14, 16) neben einem Flächenabschnitt (6) auf das Luftfahrzeug,
- gleichzeitiges optisches Erfassen (36) mindestens eines Bereichs des Markierungselements (8) und mindestens eines Bereichs des Flächenabschnitts (6) mittels einer optischen Erfassungseinrichtung (18),
- Entfernen (38) der optischen Erfassungseinrichtung (18),
- ein- oder mehrfaches Führen (40) einer handgeführten Sensoreinrichtung (22) an eine vorgegebene Position relativ zu dem Markierungselement (8) innerhalb des Flächenabschnitts (6) und dortiges Erfassen (42) einer Materialeigenschaft,
- Korrelieren (44) der erfassten Materialeigenschaft mit der betreffenden Position in einem Datensatz, und
- Generieren (46) und Ablegen (48) einer Schadenskarte, in der eine optisch erfasste Struktur des Flächenabschnitts (6) mit der zusätzlichen Materialeigenschaft an mindestens einer Position zusammengeführt sind,
**dadurch gekennzeichnet, dass**
das Führen (40) der Sensoreinrichtung (22) das Projizieren mindestens einer Laserlinie (30, 32) von der Sensoreinrichtung (22) nach außen und das Verschieben der Sensoreinrichtung (22) zum Fluchten der mindestens einen Laserlinie (30, 32) mit mindestens einer der Rastermarkierungen (14, 16) umfasst.

2. Verfahren nach Anspruch 1,
wobei das Markierungselement (8) zwei rechtwinklig zueinander angeordnete Arme (10, 12) aufweist, die jeweils Rastermarkierungen (14, 16) aufweisen.

3. Verfahren nach Anspruch 1 oder 2,
wobei die Sensoreinrichtung (22) mehrfach auf einer matrixartigen Anordnung von Positionen geführt wird.

4. Verfahren nach einem der vorhergehenden Ansprüche,
wobei das Markierungselement (8) und der Flächenabschnitt (6) vollständig mittels der optischen Erfassungseinrichtung (18) in einer oder mehreren Erfassungsvorgängen erfasst werden.

5. Verfahren nach einem der vorhergehenden Ansprüche,
wobei die Sensoreinrichtung (22) Kreuzlinien projiziert.

6. Verfahren nach Anspruch 2, 3 und 4,
wobei die Sensoreinrichtung (22) nacheinander auf den Positionen der matrixartigen Anordnung derart verschoben wird, dass dabei die Kreuzlinien mit mehreren Paaren von Rastermarkierungen (14, 16) der beiden Arme (10, 12) des Markierungselements (8) korrelieren.

7. Verfahren nach einem der vorhergehenden Ansprüche,
wobei die vorgegebene Position jeweils durch ein optisches, akustisches oder haptisches Signal mitgeteilt wird, und
wobei das Erfassen (42) durch Betätigen (52) einer Eingabeeinheit (23) nach dem Führen (40) der Sensoreinrichtung (22) initiiert wird.

8. System (54) zum Erfassen von Eigenschaften eines Flächenabschnitts (6) an einem Luftfahrzeug, aufweisend:
- mindestens ein Markierungselement (8) mit mehreren Rastermarkierungen (14, 16) zum Aufbringen neben einen Flächenabschnitt (6) auf das Luftfahrzeug,
- eine handgeführte Sensoreinrichtung (22), und
- eine Recheneinheit (56),
wobei die Recheneinheit (56) dazu ausgebildet ist, Oberflächenstrukturdaten von einer optischen Erfassungseinrichtung (18) aufzunehmen, die dazu ausgebildet ist, eine Struktur des Flächenabschnitts (6) nebst Markierungselement (8) optisch abzutasten,
wobei die Sensoreinrichtung (22) dazu ausgebildet ist, eine lokale Materialeigenschaft an dem Flächenabschnitt (6) zu erfassen,
wobei die Sensoreinrichtung (22) dazu ausgebildet ist, mindestens eine Laserlinie (30, 32) nach außen abzugeben, um einen Benutzer zu führen, die Sensoreinrichtung (22) zum Fluchten der mindestens einen Laserlinie (30, 32) mit mindestens einer der Rastermarkierungen (14, 16) des neben dem Flächenabschnitt (6) aufgebrachten Markierungselements (8) zu bewegen,
wobei die Recheneinheit (56) dazu ausgebildet ist, die erfasste Materialeigenschaft mit der betreffenden Position in einem Datensatz zu korrelieren, und
wobei die Recheneinheit (56) dazu ausgebildet ist, eine Schadenskarte zu generieren und abzulegen, in der eine optisch erfasste Struktur des Flächenabschnitts (6) mit der zusätzlichen Materialeigenschaft an mindestens einer Position zusammengeführt sind.

9. System (54) nach Anspruch 8,
wobei das Markierungselement (8) zwei rechtwinklig zueinander angeordnete Arme (10, 12) aufweist, die jeweils Rastermarkierungen aufweisen.

10. System (54) nach Anspruch 8 oder 9,
wobei die Sensoreinrichtung (22) dazu ausgebildet ist, Kreuzlinien zu projizieren.

11. System (54) nach einem der Ansprüche 8 bis 10,
wobei die Sensoreinrichtung (22) eine Auflagefläche aufweist, die zum Erfassen der Materialeigenschaft auf den Flächenabschnitt (6) aufzulegen ist, und
wobei die Sensoreinrichtung (22) dazu ausgebildet ist, die mindestens eine Laserlinie (30, 32) parallel zu der Auflagefläche zu projizieren.

12. System (54) nach einem der Ansprüche 8 bis 11,
wobei die Sensoreinrichtung (22) einen Ultraschallmesskopf aufweist.

## Claims

1. A method of detecting characteristics of a surface portion (6) on an aircraft, comprising the steps of:
- applying (34) a marking element (8) with a plurality of grid markings (14, 16) next to a surface portion (6) to the aircraft,
- simultaneously optically detecting (36) at least one region of the marking element (8) and at least one region of the surface portion (6) by means of an optical detection device (18),
- removing (38) the optical detection device (18),
- guiding (40) a hand-guided sensor device (22) once or several times to a predetermined position relative to the marking element (8) within the surface portion (6) and detecting (42) a material property there,
- correlating (44) the detected material property with the relevant position in a dataset, and
- generating (46) and storing (48) a damage map in which an optically detected structure of the surface portion (6) is combined with the additional material property at at least one position,
**characterised in that**
the guiding (40) of the sensor device (22) comprises projecting at least one laser line (30, 32) outwards from the sensor device (22) and moving the sensor device (22) to align the at least one laser line (30, 32) with at least one of the grid markings (14, 16).

2. Method according to claim 1, wherein the marking element (8) has two arms (10, 12) arranged at right angles to each other, each of which has grid markings (14, 16).

3. Method according to claim 1 or 2, wherein the sensor device (22) is guided several times on a matrix-like arrangement of positions.

4. Method according to one of the preceding claims, wherein the marking element (8) and the surface portion (6) are completely detected by means of the optical detection device (18) in one or more detection operations.

5. Method according to one of the preceding claims, wherein the sensor device (22) projects cross lines.

6. Method according to claims 2, 3 and 4, wherein the sensor device (22) is displaced successively on the positions of the matrix-like arrangement in such a way that the cross lines correlate with several pairs of grid markings (14, 16) of the two arms (10, 12) of the marking element (8).

7. Method according to one of the preceding claims, wherein the predetermined position is communicated in each case by an optical, acoustic or haptic signal, and wherein the detection (42) is initiated by actuating (52) an input unit (23) after guiding (40) the sensor device (22).

8. System (54) for detecting characteristics of a surface portion (6) on an aircraft, comprising:
- at least one marking element (8) having a plurality of grid markings (14, 16) for application adjacent to a surface portion (6) on the aircraft,
- a hand-guided sensor device (22), and
- a computing unit (56), wherein the computing unit (56) is designed to receive surface structure data from an optical detection device (18) which is designed to optically scan a structure of the surface portion (6) together with the marking element (8),
wherein the sensor device (22) is designed to detect a local material property on the surface portion (6),
wherein the sensor device (22) is adapted to emit at least one laser line (30, 32) outwardly to guide a user to move the sensor device (22) to align the at least one laser line (30, 32) with at least one of the grid markings (14, 16) of the marking element (8) applied adjacent to the surface portion (6),
the computing unit (56) being designed to correlate the detected material property with the relevant position in a dataset, and
wherein the computing unit (56) is designed to generate and store a damage map in which an optically detected structure of the surface portion (6) is brought together with the additional material property at at least one position.

9. System (54) according to claim 8, wherein the marking element (8) has two arms (10, 12) arranged at right angles to each other, each of which has grid markings.

10. System (54) according to claim 8 or 9, wherein the sensor device (22) is designed to project cross lines.

11. System (54) according to one of claims 8 to 10, wherein the sensor device (22) comprises a support surface which is to be placed on the surface portion (6) for detecting the material property, and wherein the sensor device (22) is designed to project the at least one laser line (30, 32) parallel to the support surface.

12. System (54) according to one of claims 8 to 11, wherein the sensor device (22) comprises an ultrasonic measuring head.

## Revendications

1. Procédé de détection de caractéristiques d'une partie de surface (6) sur un aéronef, comprenant les étapes consistant à:
- Application (34) sur l'aéronef d'un élément de marquage (8) comportant une pluralité de marques de trame (14, 16) adjacentes à une partie de surface (6),
- détection optique (36) simultanée d'au moins une zone de l'élément de marquage (8) et d'au moins une zone de la partie de surface (6) au moyen d'un dispositif de détection optique (18),
- retrait (38) du dispositif de détection optique (18),
- guider (40) une ou plusieurs fois un dispositif de détection (22) guidé à la main vers une position prédéterminée par rapport à l'élément de marquage (8) à l'intérieur de la partie de surface (6) et y détecter (42) une caractéristique de matériau,
- corrélation (44) de la caractéristique de matériau détectée avec la position concernée dans un ensemble de données, et
- génération (46) et dépôt (48) d'une carte de dommages dans laquelle une structure détectée optiquement de la partie de surface (6) est réunie avec la caractéristique de matériau supplémentaire à au moins une position,
**caractérisé en ce que**
le guidage (40) du dispositif de détection (22) comprend la projection d'au moins une ligne laser (30, 32) vers l'extérieur du dispositif de détection (22) et le déplacement du dispositif de détection (22) pour aligner la au moins une ligne laser (30, 32) avec au moins l'un des marques de trame (14, 16).

2. Procédé selon la revendication 1, dans lequel l'élément de marquage (8) comporte deux bras (10, 12) disposés perpendiculairement l'un par rapport à l'autre et comportant chacun des marques de trames (14, 16).

3. Procédé selon la revendication 1 ou 2, dans lequel le dispositif de détection (22) est guidé plusieurs fois sur un agencement matriciel de positions.

4. Procédé selon l'une quelconque des revendications précédentes, dans lequel l'élément de marquage (8) et la partie de surface (6) sont entièrement détectés au moyen du dispositif de détection optique (18) en une ou plusieurs opérations de détection.

5. Procédé selon l'une quelconque des revendications précédentes, dans lequel le dispositif de détection (22) projette des lignes croisées.

6. Procédé selon les revendications 2, 3 et 4, dans lequel le dispositif de détection (22) est déplacé successivement sur les positions de l'agencement matriciel de telle sorte que les lignes croisées soient corrélées à plusieurs paires de marques de trame (14, 16) des deux bras (10, 12) de l'élément de marquage (8).

7. Procédé selon l'une des revendications précédentes, dans lequel la position prédéfinie est communiquée à chaque fois par un signal optique, acoustique ou haptique, et dans lequel la détection (42) est initiée par l'actionnement (52) d'une unité d'entrée (23) après le guidage (40) du dispositif de détection (22).

8. Système (54) pour détecter des caractéristiques d'une partie de surface (6) sur un aéronef, comprenant:
- au moins un élément de marquage (8) avec une pluralité de marques de trame (14, 16) à appliquer de manière adjacente à une partie de surface (6) sur l'aéronef,
- un dispositif de détection manuel (22), et
- une unité de calcul (56), l'unité de calcul (56) étant conçue pour recevoir des données de structure de surface d'un dispositif de détection optique (18) qui est conçu pour balayer optiquement une structure de la partie de surface (6) en plus de l'élément de marquage (8),
le dispositif de détection (22) étant conçu pour détecter une caractéristique locale du matériau sur la partie de surface (6),
le dispositif de détection (22) étant conçu pour émettre au moins une ligne laser (30, 32) vers l'extérieur afin de guider un utilisateur pour déplacer le dispositif de détection (22) pour aligner la au moins une ligne laser (30, 32) avec au moins l'un des marques de trame (14, 16) de l'élément de marquage (8) appliqué à côté de la partie de surface (6),
l'unité de calcul (56) étant conçue pour corréler la caractéristique de matériau détectée avec la position concernée dans un ensemble de données, et
dans lequel l'unité de calcul (56) est conçue pour générer et stocker une carte de dommages dans laquelle une structure détectée optiquement de la partie de surface (6) est associée à la caractéristique de matériau supplémentaire à au moins une position.

9. Système (54) selon la revendication 8, dans lequel l'élément de marquage (8) comporte deux bras (10, 12) disposés perpendiculairement l'un par rapport à l'autre et comportant chacun des marques de trame.

10. Système (54) selon la revendication 8 ou 9, dans lequel le dispositif de détection (22) est conçu pour projeter des lignes croisées.

11. Système (54) selon l'une quelconque des revendications 8 à 10, dans lequel le dispositif de détection (22) comprend une surface d'appui à appliquer sur la partie de surface (6) pour détecter la caractéristique du matériau, et dans lequel le dispositif de détection (22) est configuré pour projeter la au moins une ligne laser (30, 32) parallèlement à la surface d'appui.

12. Système (54) selon l'une quelconque des revendications 8 à 11, dans lequel le dispositif de détection (22) comprend une tête de mesure à ultrasons.
